Europäisches Patentamt

European Patent Office

Office européen des brevets

(19)

(11) Veröffentlichungsnummer : **0 208 871**
**B1**

# (12) EUROPÄISCHE PATENTSCHRIFT

(45) Veröffentlichungstag der Patentschrift :
11.01.89

(21) Anmeldenummer : 86106745.2

(22) Anmeldetag : 16.05.86

(51) Int. Cl.⁴ : **B 09 B   3/00**, B 09 B   1/00,
C 04 B  18/04

(54) **Verfahren zur Herstellung auslaugfester Agglomerate.**

(30) Priorität : 13.07.85 DE 3525111

(43) Veröffentlichungstag der Anmeldung :
21.01.87 Patentblatt 87/04

(45) Bekanntmachung des Hinweises auf die Patenterteilung : 11.01.89 Patentblatt 89/02

(84) Benannte Vertragsstaaten :
AT BE CH FR GB IT LI NL SE

(56) Entgegenhaltungen :
CH–A–   649 233
DE–A– 2 342 901
DE–A– 2 547 908
DE–A– 2 934 820
DE–A– 3 023 665
DE–A– 3 325 775
DE–B– 1 296 072

(73) Patentinhaber : Eirich, Hubert
Sandweg 16
D-6969 Hardheim (DE)

Eirich, Paul
Bahnhofstrasse 11
D-6969 Hardheim (DE)

Eirich, Walter
Spessartweg 16
D-6969 Hardheim (DE)

(72) Erfinder : Eirich, Hubert
Sandweg 16
D-6969 Hardheim (DE)
Erfinder : Eirich, Paul
Bahnhofstrasse 11
D-6969 Hardheim (DE)
Erfinder : Eirich, Walter
Spessartweg 16
D-6969 Hardheim (DE)

(74) Vertreter : Weber, Dieter, Dr. et al
Dr. Dieter Weber und Dipl.-Phys. Klaus Seiffert Patentanwälte Gustav-Freytag-Strasse 25 Postfach 6145
D-6200 Wiesbaden 1 (DE)

EP 0 208 871 B1

**Beschreibung**

Die Erfindung betrifft ein Verfahren zur Herstellung auslaugfester Agglomerate aus feinteiligen Abfallstoffen durch Vermischen der feinteiligen Abfallstoffe mit einem hydraulischen Bindemittel und Wasser und anschließende Härtung.

Das stetig zunehmende Umweltbewußtsein führt dazu, daß immer mehr Abfallstoffe, die bisher normal deponiert wurden, als umweltschädlich bekannt werden. So war es in der Vergangenheit üblich, beispielsweise Aschen aus Müllverbrennungsanlagen oder der Klärschlammverbrennung sowie Filterstäube auf eigens hierfür angelegten Halden oder auf normalen Mülldeponien zu lagern. Neuere Erkenntnisse zeigten jedoch, daß aus solchen Aschen und Stäuben während der Lagerung häufig giftige Stoffe, wie Schwermetalle, durch Regenwasser ausgewaschen und über das Grundwasser verteilt werden.

Die CH-A-649 233 beschreibt ein Verfahren zur Ab- und Endlagerung feinteiliger Abfallstoffe, bei denen die Abfallstoffe mit einem hydraulischen Bindemittel und der zur Härtung desselben erforderlichen Menge an Wasser zu einer gieß- bzw. fließfähigen Mischung vermischt werden. Die Mischung wird entweder in diesem gieß- bzw. fließfähigen Zustand unmittelbar in einen Deponieraum eingebracht und dort als Masse zum Aushärten gebracht oder zunächst in eine Form eingefüllt und darin ausgehärtet, worauf der so gewonnene Formling in den Deponieraum überführt wird. Die Nachteile dieses Verfahrens bestehen darin, daß man große Mengen des hydraulischen Bindemittels benötigt und daß wegen der Porosität der gehärteten Bindemittel keine ausreichende Auslaugfestigkeit erzielbar ist.

Die der Erfindung zugrundeliegende Aufgabe bestand somit darin, ein Verfahren zur Herstellung deponierfähiger Agglomerate feinteiliger Abfallstoffe zu bekommen, bei dem mit möglichst wenig Bindemittel und damit möglichst geringen Kosten eine hohe Auslaugfestigkeit erzielt wird.

Das erfindungsgemäße Verfahren zur Herstellung auslaugfester Agglomerate aus feinteiligen Abfallstoffen durch Vermischen der feinteiligen Abfallstoffe mit einem hydraulischen Bindemittel und Wasser und anschließende Härtung ist dadurch gekennzeichnet, daß man das hydraulische Bindemittel in Wasser unter Zwangsmischen so lange aufschließt, bis es im wesentlichen nicht mehr sedimentiert, die so erhaltene wäßrige kolloidale Lösung mit den feinteiligen Abfallstoffen vereinigt und dabei den Wassergehalt des Gemisches auf eine agglomerierfähige Konsistenz einstellt und das Gemisch vor dem Härten unter Bewegen agglomeriert.

Die Verwendung eines mit einer wäßrigen kolloidalen Lösung aufgeschlossenen hydraulischen Bindemittels führt zu wesentlichen Vorteilen. Die Bindemittelteilchen einer solchen kolloidalen Lösung sind kleiner als die üblichen Teilchengrößen feinteiliger Abfallstoffe, wie Aschen von Müllverbrennungsanlagen oder Klärschlammverbrennungsanlagen sowie Filterstäuben, so daß jedes Abfallstoffteilchen von einer dünnen Bindemittelschicht eingeschlossen wird. Jede Granalie des Agglomerates besteht also aus einzelnen, jeweils von Bindemittelpartikeln umhüllten Teilchen des zu deponierendes Abfallstoffes, so daß auch mechanische Beschädigungen einer solchen Granalie den eingeschlossenen Abfallstoff nicht der Auslaugwirkung von Regenwasser zugänglich macht, wie dies der Fall wäre, wenn die Granalie als Ganzes von einer Bindemittelschicht umhüllt würde.

Weitere Vorteile der Verwendung eines in einer kolloidalen Lösung aufgeschlossenen hydraulischen Bindemittels besteht darin, daß sich beim Härten dieses Bindemittels eine porenfreie und wasserdichte Umhüllung ergibt, was im Gegensatz zu normal verarbeitetem hydraulischen Bindemittel steht. Daraus ergibt sich, daß das vorliegende Verfahren zu absolut auslaugfesten Agglomeraten führt.

Noch ein weiterer Vorteil des Verfahrens besteht darin, daß man die diskutierte Auslaugfestigkeit mit sehr geringen Bindemittelnmengen erhält, da auf den Teilchen des zu deponierenden Abfallstoffes ein sehr dünner Bindemittelfilm ausgebildet wird und dieser ausreicht, eine Auslaugfestigkeit zu erhalten und die Einzelteilchen zu deponierfähigen Agglomeraten zusammenbacken zu lassen. Die Verwendung geringer Bindemittelmengen führt andererseits zu einem kostengünstigen Verfahren, was bei Entsorgungsverfahren von besonderer Bedeutung ist.

Als Bindemittel für das erfindungsgemäße Verfahren kommen an sich alle hydraulischen Bindemittel in Betracht, soweit sie mit Wasser zu kolloidalen Lösungen aufschließbar sind. Insbesondere bevorzugt sind dabei als hydraulische Bindemittel Zement oder Kalk.

Zement läßt sich durch Einsatz entsprechender Scherkräfte in Wasser zu einer kolloidalen Lösung aufbereiten, die eine gelartige Konsistenz hat. Diese Masse wird auch als Kolloidalzement bezeichnet.

Die Verwendung von Kalkhydrat als Bindemittel hat den Vorteil, daß Kalkhydrat im allgemeinen eine noch größere Feinheit als Zement besitzt, so daß sich Kalkhydrat insbesondere für sehr feinteilige Abfallstoffe eignet. Selbstverständlich können auch Kombinationen von Zement und Kalk eingesetzt werden, was besonders dann von Interesse sein dürfte, wenn das einzuhüllende Material eine ungünstige Kornverteilung besitzt, bei der verbleibende große Poren durch Füllstoff gefüllt werden sollen.

Das Enstehen von Agglomeraten bei dem erfindungsgemäßen Verfahren ist von besonderem Vorteil für die Entsorgung, da derartige Agglomerate problemlos mit herkömmlichen mechanischen Fördergeräten transportiert und in üblicher Weise deponiert werden können, ohne daß bei windigem Wetter Staubentwicklung zu befürchten wäre.

Es wurde bereits erwähnt, daß relativ kleine Bindemittelmengen ausreichen, auslaugfeste Überzüge zu bekommen. Zweckmäßig verwendet man 3 bis 15, vorzugsweise 5 bis 10 Gewichts-% hydraulisches Bindemittel, bezogen auf die Menge der zu agglomerierenden Abfallstoffe. Da es sich zudem um relativ preiswerte Bindemittel handelt, ist ersichtlich, daß das Gesamtverfahren hinsichtlich der notwendigen Ausgangsstoffe äußerst preisgünstig ist.

Der Aufschluß erfolgt mit einer solchen Wassermenge, die für die erforderliche Hydratisierung des Bindemittels ausreicht. Bezogen auf die Menge des hydraulischen Bindemittels verwendet man daher für den Aufschluß bevorzugt eine Wassermenge von 10 bis 50, vorzugsweise 25 bis 35 Gewichts-%. Selbstverständlich kann beim Aufschluß des hydraulischen Bindemittels mehr Wasser verwendet werden, doch gibt dies keine zusätzlichen Vorteile, sondern den Nachteil erhöhten Energieverbrauchs und größerer Behältnisse während des Aufschlusses.

Der Aufschluß erfolgt durch Einwirkung von Scherkräften auf die wäßrige Suspension des Bindemittels, etwa durch heftiges Rühren. Die Aufschlußzeit hängt von der Menge des Bindemittels des Wassers sowie der Stärke der Scherkräfte, d. h. der eingeführten Energie ab. Der Aufschluß ist beendet, wenn bei Aufhebung der Scherkräfte, d. h. beim Abstellen der Rührwirkung, das Aufschlußgemisch im wesentlichen nicht mehr sedimentiert, sondern eine stabile kolloidale Lösung bleibt.

Nach dem Aufschließen des hydraulischen Bindemittels wird die so erhaltene kolloidale Lösung mit den zu agglomerierenden feinteiligen Abfallstoffen vereinigt, und der Wassergehalt des Gemisches wird auf eine agglomerierbare Konsistenz eingestellt. Da das Aufschließen des Bindemittels im allgemeinen bevorzugt mit der kleinst möglichen Wassermenge durchgeführt wird, ist es gewöhnlich erforderlich, dem Gemisch vor dem Agglomerieren weiteres Wasser zuzusetzen. Eine agglomerierfähige Konsistenz erhält man im allgemeinen dann, wenn das zu agglomerierende Gemisch 5 bis 30, vorzugsweise 10 bis 20 Gewichts-% Wasser, bezogen auf die zu agglomerierenden Abfallstoffe, enthält.

Das Agglomerieren kann im Grundsatz mit jedem beliebigen Zwangsmischer erfolgen, mit dem bekannterweise pelletisiert werden kann.

Der Aufschluß des hydraulischen Bindemittels kann entweder in einer getrennten Einrichtung außerhalb des Mischgranulators durchgeführt werden. Es besteht aber auch die Möglichkeit, das Aufschließen des Bindemittels und das Granulieren in demselben Gerät durchzuführen, indem man einen Mischgranulator mit verstellbaren Drehzahlen einsetzt. In der ersten Phase des Aufschließens arbeitet ein solcher Mischgranulator mit hoher Drehzahl, in der zweiten Phase des Agglomerierens dagegen mit niedriger Drehzahl.

Damit die Agglomerate transportfähig werden, müssen sie gehärtet werden. Bei Verwendung von Kalkhydrat als Bindemittel kann das Abbinden oder Härten durch Zufuhr von Kohlendioxid beschleunigt werden, da hierdurch das Kalkhydrat zu $CaCO_3$ karbonisiert wird. Als Kohlendioxidquelle können Feuerungsabgase genutzt werden.

Die Härtung von Kolloidalzement erfolgt durch chemische Reaktionen, die für Zement an sich bekannt sind.

Die Abbinde- oder Härtungsgeschwindigkeit des hydraulischen Bindemittels kann durch Wärmezufuhr erhöht werden. Diese kann bereits während des Mischens und Agglomerierens zugeführt werden, wie durch Einführung von warmem Wasser oder Wasserdampf, durch Verwendung warmer zu agglomerierender Abfallstoffe, wie von Flugstäuben aus Elektrofiltern, oder durch Einführung von Wärme von Feuerungsanlagen, die sich im Regelfall an der Aufbereitungsanlage befinden. Durch das Anwärmen kann entweder kolloidale Lösung des hydraulischen Bindemittels oder anschließend die gesamten Mischung beispielsweise auf eine Temperatur von 50 bis 60 °C gebracht werden, was zu einer relativ schnellen Entwicklung der erforderlichen Frühfestigkeit führt, und zwar schneller als die Wärmezufuhr von außen.

Falls bei kälterem Klima eine zusätzliche Wärmezufuhr von außen erforderlich ist, kann dies unter Benutzung der Abwärme der benachbarten Feuerungsanlage erfolgen. So bieten sich unterschiedliche Möglichkeiten an. Beispielsweise kann der Raum oder Behälter, in dem die Härtung der Agglomerate stattfindet, mit Wasserdampf beaufschlagt werden, der durch die Abgase der Feuerung erzeugt wurde. In einem Wärmetauscher kann Frischluft durch die Abgase der Feuerung aufgeheizt und als Heißluft in die Härtekammer geblasen werden. Zur Bewahrung der für das Abbinden des Zementes erforderlichen Luftfeuchtigkeit wird zweckmäßig gleichzeitig mit der Heißluft auch Wasser in die Härtekammer eingeführt. Bei der Verwendung von Kalk bzw. Kalkhydrat als Bindemittel und/oder Füller können auch direkt Kohlendioxide aus den Abgasen in die Härtekammer eingeleitet werden.

Die Dauer der Abbindens oder Härtens hängt von der gewünschten Festigkeit sowie den Härtungsbedingungen, wie Temperatur, $CO_2$-Konzentration, usw. ab.

Im allgemeinen liegt die Härtungsdauer im Bereich von 2 bis 10 Stunden bei Wärmezufuhr. Ohne Wärmezufuhr kann sie bis zu 20 Stunden oder mehr betragen.

Das Abbinden oder Härten erfolgt zweckmäßig in einem von dem Mischgranulator getrennten Raum. Hierzu können die frisch erzeugten Agglomerate zweckmäßig in Behältnissen, wie Palettenkörben, Gitterboxen oder dergleichen, in eine geschlossene Härtungskammer gefördert und dort für die Härtung erforderlichen oder zweckmäßigen Bedingungen bezüglich Temperatur, des Feuchtigkeitsgehaltes, des $CO_2$-Gehaltes usw. ausgesetzt werden.

Die zu agglomerierenden Abfallstoffe, wie Aschen oder Filterstäube besitzen im allgemeinen und für das vorliegende Verfahren bevorzugt eine Teilchenfeinheit, bei der 50 % der Körner einen Durchmesser

3

von höchstens 100, vorzugsweise von höchstens 50, besonders von höchstens 30 µm haben. Demgegenüber liegen die Teilchengrößen der hydraulischen Bindemittel in kolloidaler Lösung erheblich geringer, wie in der Größenordnung von etwa 0,01 µm.

Wenn es sich bei den zu agglomerierenden Abfallstoffen um Aschen oder insbesondere um Flugstäube aus Elektrofiltern handelt, liegen die Temperaturen derselben meistens über 150 °C. Die Vermeidung von Beeinträchtigungen des hydraulischen Bindenmittels sollte temperaturgewöhnlich unter 100 °C, günstiger um 60 °C liegen. Um das zu erreichen, kann das Abfallstoffmaterial zunächst in den Mischgranulator gegeben werden. Durch die Zugabe einer zusätzlichen Kühlwassermenge und das daraus resultierende Verdampfen von Wasser wird die Temperatur zu einem Wert unter 100 °C herabgesetzt. Die Zugabe der kalten kolloidalen Lösung hält dann eine Gemischtemperatur im Bereich von 50 bis 60 °C ein.

Wenn besonders temperaturempfindliche Zemente verwendet werden, besteht die Möglichkeit, einen Teil des Agglomerierwassers zusammen mit dem Kühlwasser statt in Form der kolloidalen Lösung des Kolloidalzementes abzugeben. Auf diese Weise erfolgt eine Abkühlung der zu agglomerierenden Abfallstoffe nicht nur durch Verdampfung, sondern auch durch einfachen Mischeffekt durch die Zugabe von Zusatzwasser, z. B. auf 70 bis 80 °C, so daß der Kolloidalzement bei der Zugabe bereits auf einen feinteiligen Abfallstoff mit geringerer Temperatur trifft.

Das erfindungsgemäße Verfahren kann zweistufig oder einstufig durchgeführt werden. Im Falle der zweistufigen Durchführung werden hydraulisches Bindemittel und Frischwasser in einem Teermischer zu einer kolloidalen Suspension aufgeschlossen. Diese wird anschließend zusammen mit dem zu agglomerierenden Abfallstauf in einen Agglomeriermischer gegeben. In diesem werden die Abfallstaubteilchen intensiv von dem Bindemittel eingehüllt und zu Agglomeraten verformt.

Sofern zum Agglomerieren mehr Feuchtigkeit erforderlich ist, als für den Aufschluß des hydraulischen Bindemittels eingesetzt wurde, wird im Agglomeriermischer zusätzliches Wasser zugegeben. Es kann sich dabei auch um Nutzwasser handeln. Werden Aschen aus Verbrennungsanlagen verarbeitet, ist häufig eine Kühlung mit Temperaturen unterhalb 100 °C erforderlich. In diesem Fall können die Aschen bereits während des Aufschlusses im Vormischer mit Kühlwasser ersetzt und mit diesem zusammen dem Agglomeriermischer zugeführt werden. Das Wasser verdampft bei dem Vermischen mit dem heißen Abfallstoff und kühlt diesen auf die erforderliche Temperatur unter 100 °C ab. Nach einem solchen Abkühlen kann die kolloidale Bindemittellösung zugegeben werden. Das Abkühlen der Asche und das Aufbereiten der kolloidalen Bindemittellösung kann so gleichzeitig erfolgen.

Die im Agglomeriermischer hergestellten Pellets oder Granalien werden in Behältnisse abgefüllt und in die Härtekammer geführt. Dort erfolgt die Härtung gegebenenfalls unter Zufuhr von Wärme und/oder $CO_2$ in der Form von Abgasen, Dampf oder Heißluft.

Die auf diese Weise erzeugten Agglomerate könne gefahrlos transportiert und auf normalen Deponien abgelagert werden. Gegebenenfalls können solche Agglomerate auch als Zuschlagstoffe für die Betonerzeugung eingesetzt werden.

Bei einstufigem Durchführen des Verfahrens wird mit einem einzigen Mischer für das Aufschließen des hydraulischen Bindemittels und die Herstellung der Agglomerate gearbeitet. Beispielsweise kann hierzu ein sogenannter Intensivmischer bekannter Bauart verwendet werden, dessen Mischwerkzeuge in der ersten Stufe beim Aufschluß des Bindemittels mit erhöhter Drehzahl zur Erzeugung der erforderlichen Scherkräfte arbeiten.

In der zweiten Stufe wird die Drehzahl und eventuell Drehrichtung der Werkzeuge geändert, so daß durch die Zugabe der Abfallstaubes gegebenenfalls Füllstoffes Agglomerate erzeugt werden. Die Härtung der Agglomerate erfolgt dann, wie für das zweistufige Verfahren beschrieben, in einer separaten Härtungskammer.

## Beispiel 1

| | | |
|---|---|---|
| Zement | 9 kg | |
| Wasser | 18 kg | (für Hydratisierung des Zementes und als Granulierfeuchte) |
| Achse | 27 kg | |
| (kalt) | 100 kg | |
| | 127 kg | |

9 kg Zement werden in 18 kg Wasser in einem schnellaufenden Mischaggregat kolloidal aufgeschlossen, bis er nicht mehr sedimentiert. Die Bearbeitungszeit für den Aufschluß beträgt ca. 3 Minuten. Danach wird die Drehzahl der Mischwerkzeuge reduziert, und 100 g Asche werden zugegeben. Nach dem Verteilen der Suspension der Asche wird eine granulierfähige Konsistenz erzielt, die unter Einwirkung langsamlaufender geeigneter Aufbereitungswerkzeuge Granulate bildet. Für das Verteilen werden ca. 0,5 Minuten und für die Granulierung ca. 3 Minuten benötigt. Die Entleerung der Maschinen erfolgt in ca. 20 Sekunden.

Beispiel 2

| Zement | 7,5 kg |
|---|---|
| Wasser | 17,5 kg (für Hydratisierung des Zementes und als Granulierfeuchte) |
| | 25,0 kg |
| Achse | 100,0 kg + 2 kg Kühlwasser |
| (150 °C) | 125,0 kg |

Bei der Aufbereitung heißer Asche werden in der Regel zwei getrennte Maschinen benötigt. Da die Asche vor Berührung mit dem Kolloidalzement auf eine Temperatur unter 100 °C abgekühlt werden muß. Bei einer Aschetemperatur über 100 °C würde die Bindeeigenschaften des Zementes nachteilig beeinflußt.

In einem getrennten kleinen Vormischer werden 7,5 kg Zement zusammen mit 17,5 kg Wasser zu einem Kolloid aufgeschlossen. Die erforderliche Aufbereitungszeit beträgt ca. 3 Minuten.

In einem größeren Mischer werden parallel hierzu 100 kg Asche mit einer Temperatur von 150 °C durch Zugabe von ca. 2 kg Wasser auf eine Temperatur unter 100 °C gekühlt. Das in die Asche gegebene Wasser verdampft hierbei nahezu vollständig. Zweckmäßigerweise wird die Wassermenge geringfügig höher als die erforderliche Verdunstungsmenge angesetzt, damit die Asche mit einer Restfeuchte von 1-2 % bis zur Zugabe des Kolloidalzementes staubfrei bleibt. Das Kühlen der Asche bzw. die Verdunstung des Wassers benötigt ca. 0,5 Minuten. Nach beendeter Kühlung wird der Kolloidalzement aus dem Vormischer in den Hauptmischer entleert. Die Homogenisierung der Asche mit dem Kolloidalzement erfordert ca. 0,5 Minuten und die anschließende Agglomerierung ca. 3 Minuten.

## Patentansprüche

1. Verfahren zur Herstellung auslaugfester Agglomerate aus feinteiligen Abfallstoffen durch Vermischen der feinteiligen Abfallstoffe mit einem hydraulischen Bindemittel und Wasser und anschließende Härtung, dadurch gekennzeichnet, daß man das hydraulische Bindemittel in Wasser unter Zwangsmischen so lange aufschließt, bis es im wesentlichen nicht mehr sedimentiert, die so erhaltene wäßrige kolloidale Lösung mit den feinteiligen Abfallstoffen vereinigt und dabei den Wassergehalt des Gemisches auf eine agglomerierfähige Konsistenz einstellt und das Gemisch vor dem Härten unter Bewegung agglomeriert.

2. Verfahren nach Anspruch 1, dadurch gekennzeichnet, daß man als hydraulisches Bindemittel Zement und/oder Kalk verwendet.

3. Verfahren nach Anspruch 1 oder 2, dadurch gekennzeichnet, daß man 3 bis 15, vorzugsweise 5 bis 10 Gew.-%, bezogen auf die zu agglomerierenden Abfallstoffe, an hydraulischem Bindemittel verwendet.

4. Verfahren nach einem der Ansprüche 1 bis 3, dadurch gekennzeichnet, daß man den Wassergehalt des Gemisches auf 5 bis 30, vorzugsweise 10 bis 20 Gew.-%, bezogen auf die zu agglomerierenden Abfallstoffe, einstellt.

5. Verfahren nach einem der Ansprüche 1 bis 4, dadurch gekennzeichnet, daß man das hydraulische Bindemittel mit 10 bis 50, vorzugsweise 25 bis 35 Gew.-%, bezogen auf das hydraulische Bindemittel, an Wasser aufschließt.

6. Verfahren nach einem der Ansprüche 1 bis 5, dadurch gekennzeichnet, daß man die Abfallstoffe mit einer Feinteiligkeit verwendet, bei der 50 % der Körner einen Durchmesser von höchstens 100, vorzugsweise von höchstens 50, besonders von höchstens 30 μm haben.

7. Verfahren nach einem der Ansprüche 1 bis 6, dadurch gekennzeichnet, daß man die Agglomerate unter Zufuhr von Wärme, vorzugsweise während 2 bis 10 h, härtet.

8. Verfahren nach einem der Ansprüche 1 bis 7, dadurch gekennzeichnet, daß man unter Wärmezufuhr und/oder $CO_2$-Zufuhr härtet.

9. Verfahren nach einem der Ansprüche 1 bis 8, dadurch gekennzeichnet, daß man während des Mischens Wärme, insbesondere in Form von Wasserdampf, zuführt.

10. Verfahren nach einem der Ansprüche 1 bis 9, dadurch gekennzeichnet, daß im Falle der Verwendung heißer feinteiliger Abfallstoffe diese vor dem Vermischen mit dem aufgeschlossenen hydraulischen Bindemittel auf eine Temperatur unter 100 °C, vorzugsweise zwischen 50 und 80 °C, gekühlt werden.

11. Verfahren nach einem der Ansprüche 1 bis 10, dadurch gekennzeichnet, daß man als feinteilige Abfallstoffe Aschen von Müll- oder Klärschlammverbrennungsanlagen oder Filterstäube, insbesondere solche mit Schwermetallgehalten, verwendet.

## Claims

1. A process for producing leach-proof agglomerates from finely particulate waste materials by mixing the finely particulate waste materials with a hydraulic binder and water and subsequent hardening, characterised in that the hydraulic binder is digested in water under forced mixing until it substantially ceases to sediment, that the aqueous colloidal solution thus obtained is combined with the finely particulate waste materials while adjusting the water content of the mixture to an agglomerable consistency and that the mixture is agglomerated whilst in movement prior to hardening.

2. A process according to Claim 1, characterised in that cement and/or lime is used as hydraulic binder.

3. A process according to Claim 1 or 2, characterised in that 3 to 15, preferably 5 to 10 % by weight of hydraulic binder is employed, calculated on the weight of the waste materials to be agglomerated.

4. A process according to any one of Claims 1 to 3, characterised in that the water content of the mixture is adjusted to 5 to 30, preferably 10 to 20 % by weight, calculated on the weight of the waste materials to be agglomerated.

5. A process according to any one of Claims 1 to 4, characterised in that the hydraulic binder is digested with 10 to 50, preferably 25 to 35 % by weight of water, calculated on the weight of the hydraulic binder.

6. A process according to any one of Claims 1 to 5, characterised in that the waste materials are utilized with a particle size distribution in which 50 % of the particles have a diameter not exceeding 100 $\mu$m, preferably not exceeding 50 $\mu$m, in particular not exceeding 30 $\mu$m.

7. A process according to any one of Claims 1 to 6, characterised in that the agglomerates are hardened by application of heat, preferably over 2 to 10 hours.

8. A process according to any one of Claims 1 to 7, characterised in that the hardening is carried out with application of heat and/or with $CO_2$-feed.

9. A process according to any one of Claims 1 to 8, characterised in that during the mixing heat is applied, in particular in the form of steam.

10. A process according to any one of Claims 1 to 9, characterised in that where hot, finely particulate waste materials are processed, these are cooled to a temperature below 100 °C, preferably between 50 and 80 °C, prior to being mixed with the digested binder.

11. A process according to any one of Claims 1 to 10, characterised in that the finely particulate waste materials processed are ashes of refuse incinerators or of sewage sludge incinerators or dust-collector waste, in particular those containing heavy metals.

## Revendications

1. Procédé de préparation d'agglomérats résistant au lessivage à partir de déchets finement divisés par mélange des déchets finement divisés avec un liant hydraulique et de l'eau et durcissement subséquent, caractérisé en ce que l'on disperse le liant hydraulique dans l'eau par mélange forcé jusqu'à ce qu'il ne se dépose pratiquement plus, que l'on réunit la solution aqueuse colloïdale ainsi obtenue avec les déchets finement divisés et qu'en outre on ajuste la teneur en eau du mélange à une consistance permettant une agglomération et que l'on agglomère le mélange sous agitation avant le durcissement.

2. Procédé selon la revendication 1, caractérisé par le fait que l'on utilise comme liant hydraulique du ciment et/ou de la chaux.

3. Procédé selon l'une des revendications 1 et 2, caractérisé par le fait que l'on utilise 3 à 15, de préférence 5 à 10 % en poids de liant hydraulique par rapport aux déchets à agglomérer.

4. Procédé selon l'une des revendications 1 à 3, caractérisé par le fait que l'on ajuste la teneur en eau du mélange de 5 à 30, de préférence 10 à 20 % en poids, par rapport aux déchets à agglomérer.

5. Procédé selon l'une des revendications 1 à 4, caractérisé par le fait que l'on disperse dans l'eau le liant hydraulique avec 10 à 50, de préférence 25 à 35 % en poids, d'eau par rapport au liant hydraulique.

6. Procédé selon l'une des revendications 1 à 5, caractérisé par le fait que l'on utilise les déchets à un état finement divisé, dans lequel 50 % des grains ont un diamètre d'au plus 100, de préférence d'au plus 50, en particulier d'au plus 30 $\mu$m.

7. Procédé selon l'une des revendications 1 à 6, caractérisé par le fait que l'on durcit les agglomérats avec apport de chaleur, de préférence pendant 2 à 10 h.

8. Procédé selon l'une des revendications 1 à 7, caractérisé par le fait que l'on effectue le durcissement avec apport de chaleur et/ou apport de $CO_2$.

9. Procédé selon l'une des revendications 1 à 8, caractérisé par le fait que pendant le mélange, on apporte de la chaleur, en particulier sous forme de vapeur d'eau.

10. Procédé selon l'une des revendications 1 à 9, caractérisé par le fait que, dans le cas d'une utilisation de déchets chauds finement divisés, ceux-ci sont refroidis avant le mélange avec le liant hydraulique dispersé jusqu'à une température inférieure à 100 °C, de préférence comprise entre 50 et 80 °C.

11. Procédé selon l'une des revendications 1 à 10, caractérisé par le fait que l'on utilise comme déchets finement divisés des cendres provenant d'installations d'incinération d'ordures ou de boues de curage ou des poussières de filtre, en particulier celles avec des teneurs en métaux lourds.